(19) Europäisches Patentamt
European Patent Office
Office européen des brevets

(11) EP 1 944 199 A2

(12) **EUROPÄISCHE PATENTANMELDUNG**

(43) Veröffentlichungstag:
**16.07.2008 Patentblatt 2008/29**

(51) Int Cl.:
***B60R 21/00*** *(2006.01)*

(21) Anmeldenummer: **08000429.4**

(22) Anmeldetag: **11.01.2008**

(84) Benannte Vertragsstaaten:
**AT BE BG CH CY CZ DE DK EE ES FI FR GB GR HR HU IE IS IT LI LT LU LV MC MT NL NO PL PT RO SE SI SK TR**
Benannte Erstreckungsstaaten:
**AL BA MK RS**

(30) Priorität: **13.01.2007 DE 102007001959**

(71) Anmelder: **GM Global Technology Operations, Inc.**
**Detroit MI 48265-3 (US)**

(72) Erfinder:
• **Erb, Peter**
**64404 Bickenbach (DE)**
• **Strehl, Dirk**
**64331 Weiterstadt (DE)**

(74) Vertreter: **Strauss, Peter**
**Adam Opel GmbH**
**Patent- und Markenrecht / A0-02**
**65423 Rüsselsheim (DE)**

(54) **Halterung für einen Airbagsensor**

(57) Die Erfindung betrifft eine Kraftfahrzeugkarosserie (2) mit einem Karosserieteil (3), an dem eine der Fahrzeugaußenseite zugewandte Halterung (5) für einen Airbagsensor (4) befestigt ist, wobei ein an der Halterung montierbarer oder montierter Airbagsensor horizontal beabstandet zum Karosserieteil angeordnet ist und wobei die Halterung leichter deformierbar ist als das sie halternde Karosserieteil.

Fig. 2

EP 1 944 199 A2

**Beschreibung**

Die Erfindung betrifft das Auslösen von Airbags eines Kraftfahrzeugs.

Moderne Kraftfahrzeuge besitzen einen oder mehrere Airbags, die von zugeordneten Airbagsensoren ausgelöst werden. Beispielsweise detektieren Airbagsensoren im Frontbereich des Kraftfahrzeugs eine stattfindende Deformation im Fall eines Frontalaufpralls. Um die gewährleistete Insassensicherheit messtechnisch zu überprüfen, sind Aufprall- bzw. Crashtests entwickelt worden. Ein Beispiel ist ein Aufpralltest nach EuroNCAP (European New Car Assessment Programme), bei dem ein Kraftfahrzeug mit 64 km/h und einer Strukturüberdeckung von 40 % frontal gegen eine deformierbare Barriere aufprallt. Bei diesem Test muss gewährleistet sein, dass die Airbagsensoren die Airbags zuverlässig auslösen. Da ein neu entwickeltes Kraftfahrzeug keine Zulassung erhält, wenn es nicht diesen und weitere einschlägige Tests besteht, müssen die Hersteller die Airbagsensoren derart anordnen und gestalten, dass allgemein bei einem Frontalaufprall und speziell unter den vorgegebenen Testbedingungen die Airbags zuverlässig ausgelöst werden.

Bei der praktischen Durchführung des obigen Frontalaufpralltests nach EuroNCAP wurde festgestellt, dass sich die Barrieren, auf die ein Kraftfahrzeug bei den genannten Aufpralltests aufprallt, unterschiedlich leicht deformieren lassen. Die Durchführung des Tests und die Spezifikation der Barriere sind in dem Dokument Euro-NCAP Frontal Impact Testing Protocol, Version 4.1, März 2004 festgehalten. Diese Spezifikation schreibt vor, dass der Barrierenhauptblock eine nominelle Druckfestigkeit von 0.342 MPa und die Stoßelemente eine nominelle Druckfestigkeit von 1.711 MPa haben. Die genannten Werte werden dabei nach einer Methode bestimmt, die ebenfalls in dem zitierten Dokument festgelegt ist. Die Werte dürfen eine maximale Abweichung von 10 % unter dem Nominalwert haben. Derartige Abweichungen haben zur Folge, dass bei einem Aufprall des Kraftfahrzeugs auf die Barriere diese zunächst komprimiert wird, weil sie im Vergleich zur Frontstruktur des Kraftfahrzeugs nachgiebiger ist. Erst anschließend führt die verdichtete Barriere zu einer Deformation der Kfz-Frontstruktur. Dieses Szenario bedingt, dass der Airbagsensor bei steifen bzw. druckfesten Frontstrukturen, die aus Gründen der Insassensicherheit erforderlich sind, recht spät und ggf. zu spät auslöst.

Ein früheres Airbagsignal könnte man erhalten, wenn bei einem Aufprall das Hindernis im Vergleich zur Frontstruktur weniger leicht deformierbar wäre bzw. wenn die Frontstruktur nachgiebiger wäre. Dem steht jedoch entgegen, dass die Kraftfahrzeuge, bedingt durch die immer härter werdenden Versicherungseinstufungstests, in ihrer Frontstruktur immer steifer werden. Der gegenwärtige Entwicklungstrend bei Kraftfahrzeugen verschärft insofern das obige Problem in zunehmendem Maße.

Es ist eine Aufgabe einer Ausführungsform der Erfindung, eine rechtzeitige Auslösung der Airbagsensoren bei Kraftfahrzeugen zu gewährleisten.

Die Lösung dieser Aufgabe erfolgt mit den Merkmalen der unabhängigen Ansprüche. Vorteilhafte Weiterbildungen und weitere Ausführungsformen ergeben sich mit den Merkmalen der abhängigen Ansprüche.

Eine erste Ausführungsform der Erfindung betrifft eine Kraftfahrzeugkarosserie mit einem Karosserieteil, an dem eine Halterung für einen Airbagsensor befestigt ist. Die Halterung ist der Fahrzeugaußenseite zugewandt, wobei ein an der Halterung montierbarer oder montierter Airbagsensor horizontal beabstandet zum Karosserieteil angeordnet ist. Die Halterung ist bei einem auf sie aufprallenden Fahrzeug leichter deformierbar als das sie halternde Karosserieteil.

Bei dieser ersten Ausführungsform ist demgemäß eine separate Halterung für den Airbagsensor vorgesehen. Die Halterung ist der Fahrzeugaußenseite zugewandt, sodass ein anderes Fahrzeug auf die Halterung aufprallen kann. Hierbei soll eine eventuelle Verkleidung des Airbagsensorbereichs außer Betracht bleiben, da diese dem anderen Fahrzeug typischerweise keinen nennenswerten Widerstand leistet. Auf der Außen- oder Innenseite der Halterung ist der Airbagsensor befestigt.

Kommt es zu einem Aufprall eines anderen Kraftfahrzeugs, so stößt dieses wie oben beschrieben direkt oder indirekt gegen die Halterung. Da die Halterung im Vergleich zum Karosserieteil, an dem die Halterung befestigt ist, leichter deformierbar ist, kommt es zu einer Deformation der Halterung in Richtung des besagten Karosserieteils. Dieses Deformieren in Richtung des Karosserieteils ist möglich, weil der Airbagsensor in seiner Einbauposition einen horizontalen Abstand zum besagten Karosserieteil hat. Beim Deformieren kommt es zu einer Beschleunigung des Airbagsensors und dementsprechend zu einem Auslösesignal für den Airbag.

Die Deformierbarkeit des Halters und des Karosserieteils, an dem der Halter befestigt ist, wird auf folgende Weise gemessen: baugleiche Airbagsensoren, die ihrer Art nach Beschleunigungssensoren sind, werden am Halter und dessen Befestigungsbereich am besagten Karosserieteil befestigt. Es wird ein Aufprall realisiert, wie er im EuroNCAP-Test gemäß Euro-NCAP Frontal Impact Testing Protocol, Version 4.1, März 2004 spezifiziert ist. Unter Verwendung desselben Auswertealgorithmus wird dabei jeweils die vom jeweiligen Airbagsensor gemessene Beschleunigung a(t) seit dem Aufprall aufaddiert. Das Ergebnis ist die integrierte Geschwindigkeit

$$v(t) = \int_{t=0} a(t)dt \qquad\qquad \text{(Formel 1)}$$

bei der t=0 den Aufprallzeitpunkt wiedergibt. Der Halter ist leichter deformierbar als das Karosserieteil, wenn zum Airbagauslösezeitpunkt die derart bestimmte Geschwindigkeit des am Halter befestigten Airbagsensors (= v-Halter) größer ist als die Geschwindigkeit des am Karosserieteil befestigten Airbagsensors (= v-Karosserieteil), wenn also v-Halter > v-Karosserieteil.

Da der am Halter befestige Airbagsensor aufgrund der Nachgiebigkeit bzw. Deformierbarkeit seines Halters stärker verzögert wird als der am steifen Karosserieteil befestigte Airbagsensor, liefert er ein stärkeres Signal. Dieses stärkere Signal wird dann im Airbag-Auslösealgorithmus für eine frühere Auslösung verwendet. Die Dauer der Signalüberhöhung kann über den Abstand des eingebauten Airbagsensors zum besagten Karosserieteil eingestellt werden. Die Höhe des Sensorsignals lässt sich über die Steifigkeit des Halters einstellen.

In einer zweiten Ausführungsform ist die Halterung deutlich leichter deformierbar als das sie halternde Karosserieteil. Hierunter soll verstanden werden, dass mit der oben beschriebenen Messmethode die integrierte Geschwindigkeit des Halters zum Airbagauslösezeitpunkt um mindestens 8%, bevorzugt mindestens 12% und besonders bevorzugt um mindestens 15% größer ist als die integrierte Geschwindigkeit des zugehörigen Karosserieteils. Durch die Wahl einer hinreichend leicht deformierbaren Halterung kann auch die Überlebenszeit des Airbagsensors bis zu seiner Zerstörung verlängert werden, und damit die Zeitspanne, während der der Airbagsensor überhaupt ein Signal abgibt.

In einer weiteren Ausführungsform befindet sich die Halterung auf der Vorderseite der Front oben bzw. auf dem Kühlerquerträger. Die Halterung ist damit für eine hinreichend frühe Auslösung der Airbagsensoren geeignet, die bei einem Frontalaufprall mit vollständiger oder nur teilweiser Strukturüberdeckung die Frontairbags auslösen. Bei Airbagsensoren an der Vorderseite des Kraftfahrzeugs besteht wegen der zunehmend steiferen Frontstrukturen zum Zweck einer verbesserten Insassensicherheit das genannte Problem, dass der Airbag spät oder zu spät ausgelöst wird, in besonderem Maße.

Ferner ist eine Ausführungsform vorgesehen, bei der die Halterung einen ersten Teil und einen zweiten Teil besitzt, die bezogen auf eine vorgegebene horizontale Richtung hintereinander angeordnet sind und bei der der erste Teil weniger leicht deformierbar ist als der zweite Teil. Nähert sich ein Stoßpartner, entlang der vorgegebenen horizontalen Richtung auf die Halterung und kommt es zu einem Zusammenstoß, so gewährleistet der zweite Teil der Halterung eine Beschleunigung des Airbagsensors und ein frühzeitiges Airbagsensorsignal. Der erste Teil der Halterung erfüllt eine Schutzfunktion und verhindert ein frühzeitiges Zerstören des Airbagsensors, sodass dieser hinreichend lange ein Sensorsignal abgibt.

Bei einer weiteren Ausführungsform besitzt das Karosserieteil eine durchgehende Öffnung, durch die sich der Airbagsensor im Fall eines Zusammenstoßes mit einem anderen Fahrzeug durchschieben lässt. Wird also bei einem Aufprall die Halterung deformiert, wird dabei der Airbagsensor in Richtung des Karosserieteils verschoben, so wird am Ende des Deformationsprozesses der Airbagsensor nicht zerstört, sondern gelangt in eine sichere Position im Öffnungsbereich des Karosserieteils. Erst wenn das Karosserieteil selbst deformiert wird, kann der Airbagsensor selbst zerstört werden. Hierdurch wird sichergestellt, dass der Airbagsensor hinreichend lange ein Signal abgibt.

Weitere Merkmale und Vorteile der beanspruchten Erfindung werden aus der folgenden detaillierten Beschreibung mit Bezug auf die beigefügten Zeichnungen erkennbar, die nachfolgend als nicht beschränkende Beispiele angegeben sind. Hierbei soll die Benutzung von Bezugszeichen in den Figuren nicht dahingehend verstanden werden, dass die Bezugszeichen den Schutzumfang der beanspruchten Erfindung einschränken sollen. Es zeigen:

Fig. 1    ein Kraftfahrzeug mit einem Airbagsensor,

Fig. 2    eine erste Ausführungsform einer Halterung,

Fig. 3    eine zweite Ausführungsform einer Halterung,

Fig. 4    eine Messkurve, die das frühzeitige Auslösen eines Airbagsensorsignals zeigt, wenn die Ausführungsform der Fig. 3 eingesetzt wird.

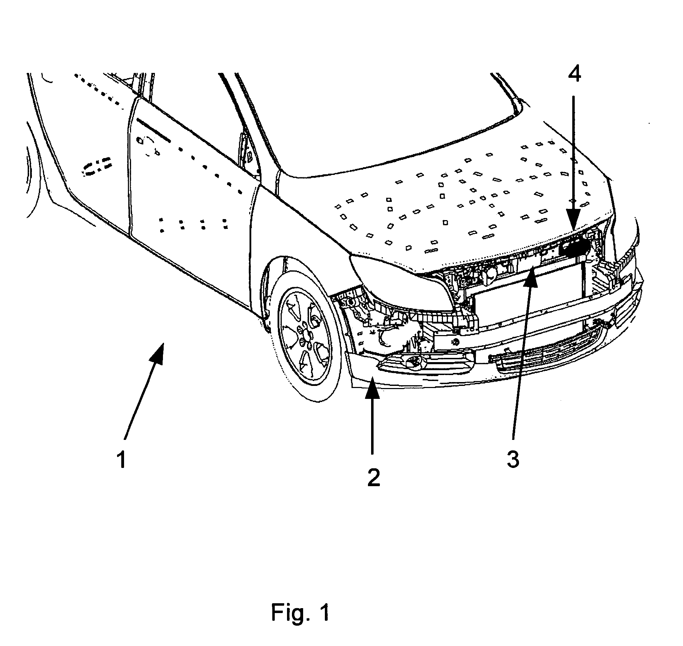

Bei den Figuren, die allgemein mit gleichen Bezugszeichen gleiche Gegenstände bezeichnen, zeigt Figur 1 ein Kraftfahrzeug 1 mit einer Karosserie 2. An der Fahrzeugaußenseite befindet sich, montiert an der Front oben 3, ein Airbagsensor 4.

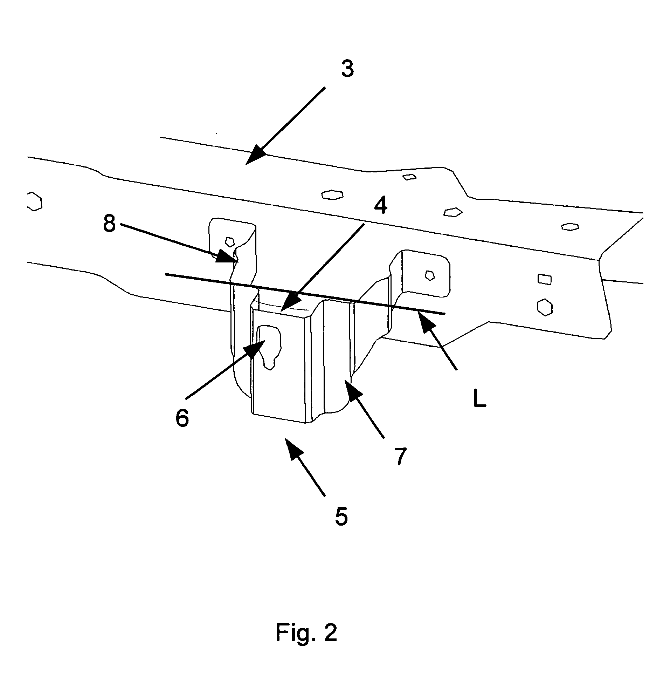

Figur 2 zeigt den Einbaubereich des Airbagsensors 4 in einer Detailaufnahme. Man erkennt, dass der Airbagsensor 4 an einer Halterung 5 befestigt ist, die wiederum an dem Karosserieteil 3 (der Front oben) befestigt ist. Die Halterung 5 hat ein Hutprofil, das hinter der Öffnung 6 den Airbagsensor 4 aufnimmt. Die Halterung 5 besitzt einen ersten Teil 7, der vor der Linie L liegt, und einen zweiten Teil 8, der hinter der Linie L angeordnet ist. Der erste Teil 7 ist weniger leicht deformierbar als der zweite Teil 8 und hat die Aufgabe, den Airbagsensor 5 zu schützen. Der zweite Teil 8 sorgt dafür, dass der Schwellwert des Airbagsensors 4, der vom Airbag-Algorithmus zum Auslösen des Airbags herangezogen wird, früher erreicht wird.

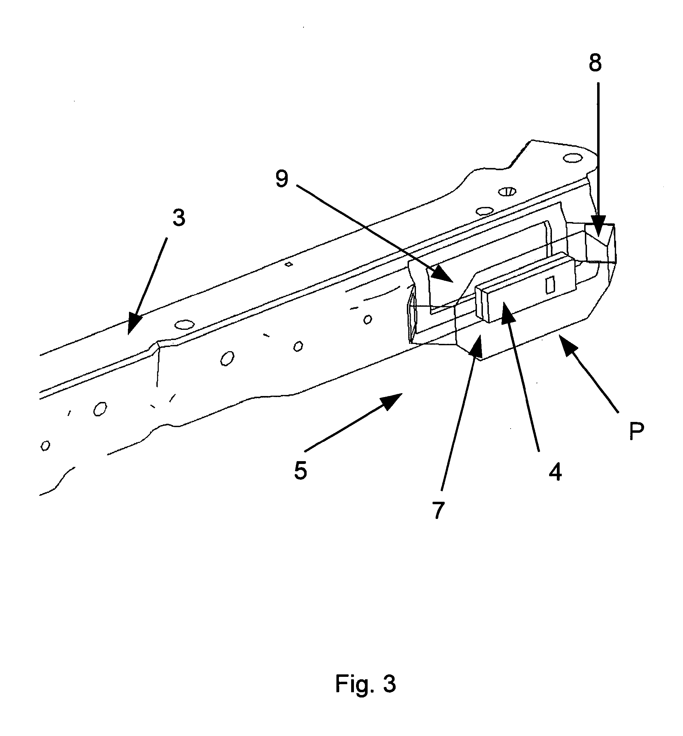

Figur 3 zeigt eine weitere Ausführungsform einer Halterung 5, die mit ihrem zweiten Teil 8 an der Front oben 3 befestigt ist. Die Front oben 3 und korrespondierend hierzu der zweite Teil 8 besitzen eine durchgehende Öffnung 9. Stößt ein Stoßpartner längs einer vorgegebenen Richtung P auf die Einheit aus Halterung 5 und Airbagsensor 4, so wird der erste Teil 7, der in Fig. 3 transparent dargestellt ist, in Richtung der Öffnung 9 deformiert. Hierbei wird der Airbagsensor 4 ganz oder teilweise durch die Öffnung 9 hinein- bzw. durchgeschoben, und gelangt in eine sichere Position. Dadurch wird die Lebensdauer des Airbagsensors 4 verlängert.

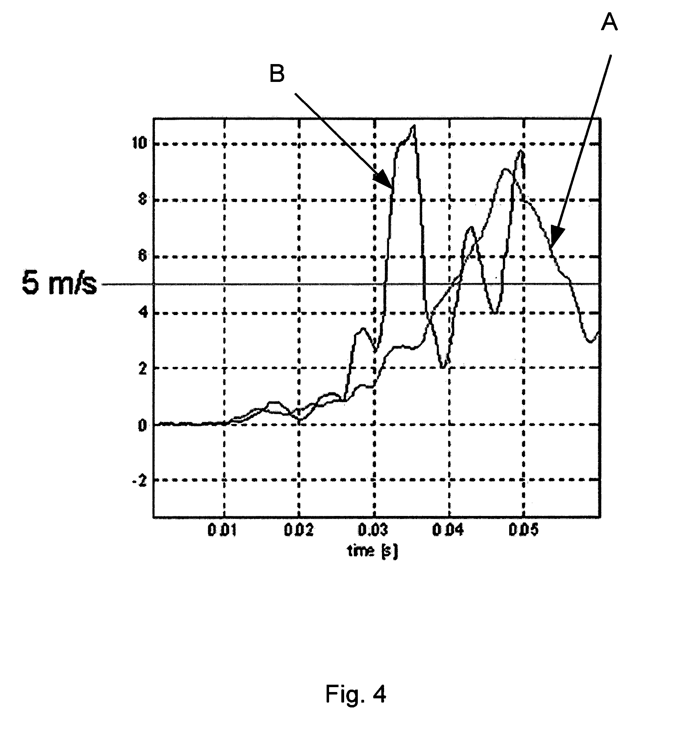

Figur 4 zeigt Simulationsergebnisse für die Ausführungsform der Figur 3. Es wurde die vom Airbagsensor 4 gemessene Beschleunigung a(t) ausgelesen und mit Formel 1 die integrierte Geschwindigkeit bestimmt. Diese Geschwindigkeit ist in m/s als Funktion derjenigen Zeit in Sekunden abgetragen, die nach dem Aufprall verstrichen ist. Die Durchführung und Auswertung der Messung erfolgte somit gemäß der oben beschriebenen Messmethode. Die Kurve A zeigt den Signalverlauf bzw. die integrierte Geschwindigkeit, ohne dass eine Halterung gemäß der Ausführungsform der Figur 3 eingesetzt wurde. Der Airbagsensor 4 war dabei direkt außen an der Front oben 3 befestigt. Die Kurve B zeigt den Signalverlauf, wie er mit der Ausführungsform der Figur 3 erhalten wurde.

Der Airbagsensor-Auslösealgorithmus des Fahrzeugs ist ausgelegt, den Airbag bei einer Geschwindigkeit von 5 m/s auszulösen. Man erkennt, dass man bei Kurve A, also nach dem Stand der Technik, eine Airbagauslösung nach 40 ms hat. 40 ms ist allerdings der allerspäteste Zeitpunkt, zu dem der Airbag aus hier nicht weiter interessierenden Gründen bei der konkret verwendeten Struktur ausgelöst werden muss. Unter Verwendung der Halterung gemäß Kurve B erreicht der Airbagsensor 4 bereits nach 32 ms den Schwellwert von 5 m/s. Dieser Zeitpunkt ist deutlich innerhalb des oben genannten 40 ms-Intervalls. Zudem ist das Signal stärker. Dadurch, dass der Schwellwert von 5 m/s früher erreicht wird, bleibt dem Airbagsensor-Algorithmus mehr Zeit, den Airbag auszulösen, um die Sicherheit der Insassen zu gewährleisten.

Obwohl vorstehend konkrete Ausführungsformen beschrieben wurden, wird der Fachmann erkennen, dass die Beschreibung dieser Ausführungsformen nicht zum Zweck hat, die Erfindung in der angegebenen Form zu beschränken. Die Erfindung soll vielmehr alle Modifikationen, Äquivalente und Alternativen umfassen, die in den Schutzumfang der beanspruchten Erfindung fallen.

Bezugszeichenliste

| 01 | Kraftfahrzeug |
| 02 | Kraftfahrzeugkarosserie |
| 03 | Karosserieteil / Front oben |
| 04 | Airbagsensor |
| 05 | Halterung |
| 06 | Öffnung |
| 07 | erster Teil |
| 08 | zweiter Teil |
| 09 | Öffnung |
| L | Linie |
| P | Pfeil |

**Patentansprüche**

1.  Kraftfahrzeugkarosserie (2) mit einem Karosserieteil (3), an dem eine der Fahrzeugaußenseite zugewandte Halterung (5) für einen Airbagsensor (4) befestigt ist, wobei ein an der Halterung montierbarer oder montierter Airbagsensor horizontal beabstandet zum Karosserieteil angeordnet ist und wobei die Halterung leichter deformierbar ist als das sie halternde Karosserieteil.

2.  Kraftfahrzeugkarosserie nach einem der vorherigen Ansprüche, bei dem die Halterung deutlich leichter deformierbar ist als das sie halternde Karosserieteil.

3. Kraftfahrzeugkarosserie nach einem der vorherigen Ansprüche, mit einer Halterung auf der Vorderseite der Front oben (3).

4. Kraftfahrzeugkarosserie nach einem der vorherigen Ansprüche, bei dem die Halterung einen ersten Teil (7) und einen zweiten Teil (8) besitzt, die bezogen auf eine vorgegebene horizontale Richtung (P) hintereinander angeordnet sind und bei dem der erste Teil weniger leichter deformierbar ist als der zweite Teil.

5. Kraftfahrzeugkarosserie nach einem der vorherigen Ansprüche, bei dem der Karosserieteil eine durchgehende Öffnung (9) besitzt, durch die sich der Airbagsensor im Fall eines Zusammenstoßes mit einem anderen Fahrzeug durchschieben lässt.

Fig. 1

Fig. 2

Fig. 3

Fig. 4